# EUROPÄISCHE PATENTSCHRIFT

(11) **EP 2 965 845 B1**
(45) Veröffentlichungstag und Bekanntmachung des Hinweises auf die Patenterteilung: **29.11.2017**
(21) Anmeldenummer: 15002368.7
(22) Anmeldetag: 01.02.2013
(51) Int. Cl.: B23C 3/06, B23B 5/18, B23Q 1/76

(54) **WERKZEUGREVOLVER**
TOOL TURRET
TOURELLE REVOLVER

(43) Veröffentlichungstag der Anmeldung: 13.01.2016
(62) Teilanmeldung aus: 13000532.5
(73) Patentinhaber: Gildemeister Drehmaschinen GmbH, 33689 Bielefeld (DE)
(72) Erfinder: Halm, Christian, DE - 33739 Bielefeld (DE)
(74) Vertreter: Schober, Mirko

(56) Entgegenhaltungen:
- EP-A1- 1 428 612
- EP-A1- 2 210 699
- US-A- 5 647 705

## Beschreibung

Die Erfindung betrifft einen Werkzeugrevolver gemäß dem Oberbegriff des Anspruchs 1 hierfür. Eine entsprechende Vorrichtung ist z. B. aus DE 100 52 443 A1 bekannt. Das Kurbelwellenwerkstück wird dort wahlweise an seinen Enden zwischen Spitzen oder im Spannfutter eingespannt. Der jeweils von einer Spitze gehaltene Endbereich des Kurbelwellenwerkstücks kann durch Drehen oder Fräsen bearbeitet werden, indem die Backen des zugehörigen Spannfutters so weit zurückfahrbar sind, dass die Werkzeuge der Bearbeitungsaggregate den Endbereich des Kurbelwellenwerkstücks erreichen können. Zur Bearbeitung der Hublager des Kurbelwellenwerkstücks - etwa durch eine Fräsbearbeitung, bei der das Kurbelwellenwerkstück um seine Hauptachse C mit Vorschubgeschwindigkeit gedreht wird - muss das Kurbelwellenwerkstück in eine definierte Drehlage verbracht werden. Dies geschieht in der genannten Druckschrift dadurch, dass ein Drehlagenanschlag und ein Stößel vorgesehen sind, wobei letzterer quer zur Vorschubrichtung Z verschieblich im Spannfutter gelagert ist, so dass er einen dem Spannfutter benachbarten Hublagerzapfen gegen den Drehlagenanschlag drückt.

Nachteilig an der bekannten Maschine ist, dass das Spannfutter mit einer Vielzahl von Verstelleinrichtungen ausgebildet sein muss.

Aus DE 103 29 677 A1 ist bekannt, zur Ausrichtung der Drehlage einer Kurbelwelle bei einer Werkzeugmaschine eine spezielle Lünette einzusetzen. Diese Lünette weist zusätzlich zu ihren Zentrierelementen verstellbare Stützbacken auf. Die Stützbacken sind so ausgelegt, dass sie zur Ausrichtung der Drehlage der Kurbelwelle am Hublager derselben angreifen können. Dieser Stützbacken muss während der Bearbeitung wieder eingefahren werden, weil er sonst die Drehbewegung des Werkstücks stören würde. Zudem hat die bekannte Vorrichtung den Nachteil, dass die dort beschriebene Lünette für einen Werkstückwechsel mit anderen Abmessungen, etwa anderen Abständen zwischen Drehachse und Hubzapfen, nur bedingt tauglich ist, da eine aufwändige Remontage der Richtbacken der Lünette erforderlich ist.

Aus DE 36 25 218 A1 ist ein Revolverkopf mit daran angebrachter, mit dem Revolverkopf integral verschieblicher Lünette bekannt. Die Anordnung der Lünette hat den Sinn, die hydraulische Versorgung der Lünette mit einen Hydraulikmedium zu verbessern. US 5 647 705 A offenbart einen Werkzeugrevolver gemäß dem Gegestand des Oberbegriffs des Anspruchs 1. Aufgabe der vorliegenden Erfindung ist es, einen Werkzeugrevolver anzugeben, die in ihrer Konstruktion vereinfacht ist und zudem eine erhöhte Bearbeitungsgenauigkeit aufweist.

Gelöst wird diese Aufgabe durch einen Werkzeugrevolver mit den Merkmalen des Anspruchs 1. Vorteilhafte Ausführungsformen finden sich in den Unteransprüchen.

Die größte Abdrängkraft tritt insbesondere beim Fräsen der Hub- und Hauptlager auf. Bevorzugt ist daher vorgesehen, dass die Lünette an einem, insbesondere in Querrichtung verschieblichen Schlitten, z.B. einen Kreuzschlitten, angeordnet ist. Dieser Kreuzschlitten trägt bevorzugt auch das Drehaggregat.

Nach einer besonderen Ausführungsform weist ein Drehaggregat den Werkzeugrevolver auf. Dieser umfasst ein Revolvergehäuse mit einem Antrieb für eine im Revolvergehäuse gelagerte Revolverwelle und eine über einen revolverwellenseitigen Befestigungsflansch an der Revolverwelle auswechselbar angebrachte, Drehwerkzeuge aufnehmende Revolverscheibe. Die Lünette ist bei dieser Ausführungsform am Werkzeugrevolver angeordnet. Dadurch kann die Freizügigkeit der Lünette erhöht werden und die Maschine erhält zusätzliche Flexibilität. Auch wenn der hier in den Ansprüchen 1 bis 5 beanspruchte erfindungsgemäße Revolver besonders für den Einsatz in einer Kurbelwellendreh- und Fräsmaschine geeignet ist, so eignet er sich auch für den Einsatz in anderen Werkzeugmaschinen.

Da der Werkzeugrevolver, bei welchem es sich um einen solchen mit einer Revolverscheibe handelt, die um die Revolverdrehachse durch einen numerisch gesteuerten Antrieb stufenlos dreh- und stillsetzbar ist, eine große Zahl von Werkzeugen trägt, wäre ein einzelner Werkzeugwechsel aufwändig und würde zu hohen Stillstandzeiten führen.

Es ist deshalb ein Werkzeugrevolver vorgesehen, welcher eine auswechselbare Revolverscheibe aufweist. Dazu ist diese an der Revolverwelle angeflanscht. Damit eine Demontage der Lünette nicht erforderlich ist, kann insbesondere vorgesehen sein, dass die Lünette zwischen dem Befestigungsflansch und der Revolverscheibe angeordnet ist. Dadurch bleibt die Lünette, die bevorzugt an dem Befestigungsflansch der Revolverwelle angebracht ist, beim Revolverscheibenwechsel an ihrer Position.

Gemäß der Erfindung weist der Werkzeugrevolver eine Revolverscheibe auf, die an ihrem Umfang im Bereich der Lünette eine Aussparung aufweist. Dadurch kann das Kurbelwellenwerkstück während der Bearbeitung in dieser Aussparung wenigstens teilweise eintauchen.

Die Lünette kann zudem schwenkbar ausgebildet sein, so dass sie aus dem Flugkreis des um die Spindelachse drehenden Kurbelwellenwerkstücks heraus geschwenkt werden kann, damit eine Drehbearbeitung der Endbereiche des Kurbelwellenwerkstücks erfolgen kann.

Die Erfindung wird nachfolgend anhand des in den Figuren 1 bis 7 gezeigten Ausführungsbeispiels näher erläutert.
- Figur 1 -: zeigt eine perspektivische Frontansicht der Kurbelwellendreh- und Fräsmaschine;
- Figur 2 -: zeigt einen Querschnitt II-II durch die Maschine aus Figur 1;
- Figur 3 -: zeigt einen vergrößerten Ausschnitt der Maschine gemäß Figur 1 mit der Lünette in Ausrichtposition;
- Figur 4 -: zeigt einen vergrößerten Ausschnitt der Maschine gemäß Figur 1 mit eingespanntem Kurbelwellenwerkstück und während der Drehbearbeitung;
- Figur 5 -: zeigt einen Ausschnitt der Maschine nach Figur 1, bei der die Lünette ein Hauptlager des Kurbelwellenwerkstücks unterstützt;
- Figur 6 -: zeigt eine perspektivische Ansicht eines erfindungsgemäßen Werkzeugrevolvers als Drehaggregat in der Maschine nach Figur 1;
- Figur 7 -: zeigt eine Darstellung des Drehaggregats gemäß Figur 6 mit entfernter Revolverscheibe.

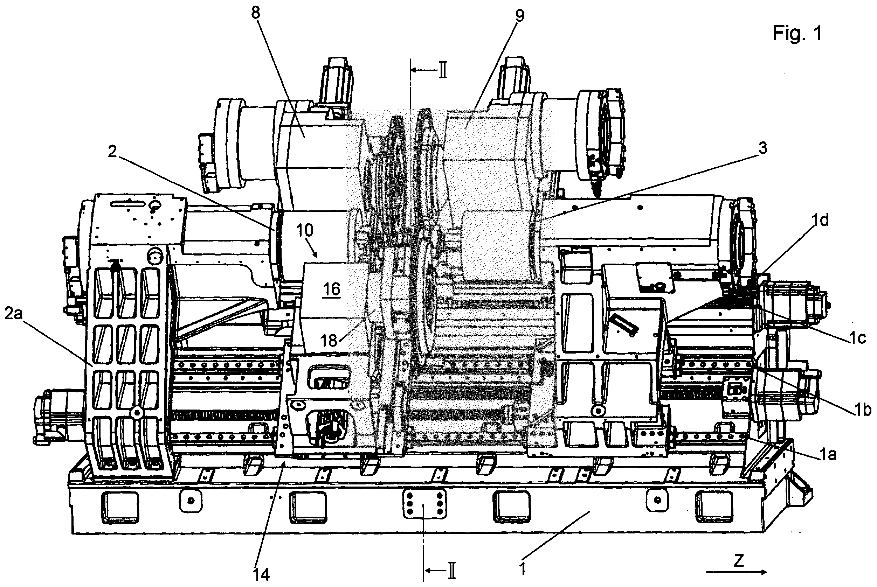

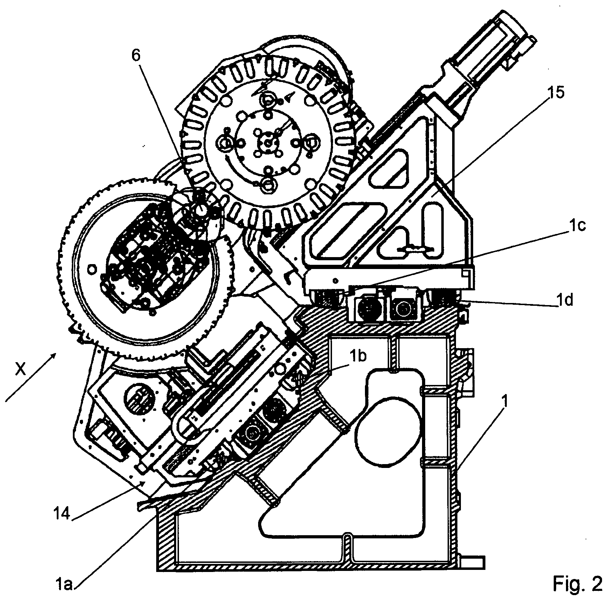

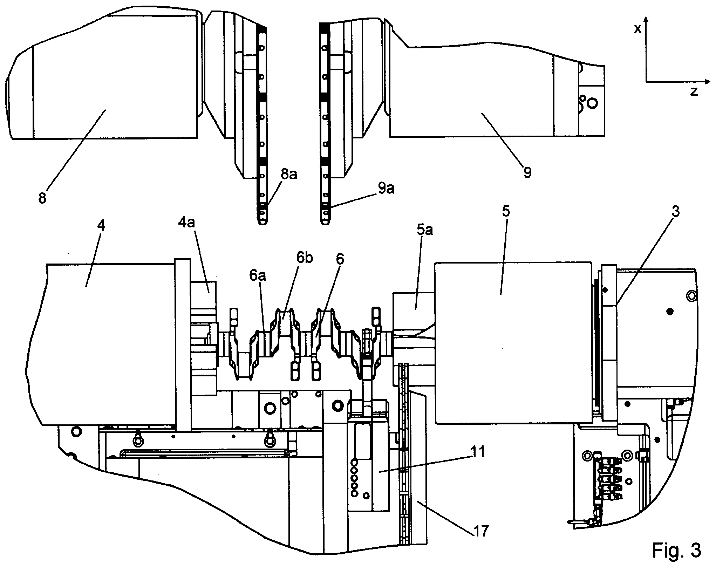

Die in Figur 1 gezeigte Kurbelwellendreh- und Fräsmaschine weist ein Maschinenbett 1 auf. Auf diesem sind untere Führungen 1a und 1b sowie obere Führungen 1c und 1d vorgesehen. An einem Ende des Maschinenbetts 1 ist ein Spindelkasten 2a unverschieblich befestigt. In diesem ist eine erste Werkstückspindel 2 drehbar um ihre Spindelachse gelagert. Auf den unteren Führungsbahnen 1a, 1b ist eine zweite Werkstückspindel 3 in Spindelachsrichtung verschieblich gelagert. Beide Spindelachsen sind parallel zur Richtung Z ausgerichtet. Die Werkstückspindel 3 trägt ein zugehöriges Spannfutter 5, die Werkstückspindel 2 trägt ein zugehöriges Spannfutter 4, welches dem Spannfutter 5 zugewandt ist, so dass zwischen den Spannfuttern 4, 5 ein Kurbelwellenwerkstück 6 (vgl. Fig. 2 bis 5) aufgespannt werden kann.

Auf den Führungsbahnen 1a, 1b ist ein Kreuzschlitten 14 gelagert, der in Spindelachsrichtung Z und quer dazu in Richtung X verschieblich ist. Der Kreuzschlitten 14 trägt ein Drehaggregat 10, welches in dem gezeigten Beispiel einen Werkzeugrevolver aufweist.

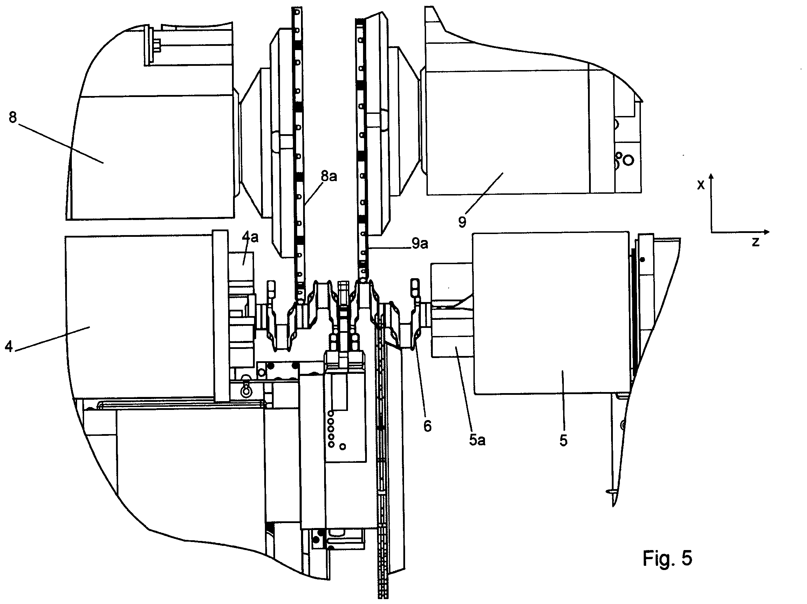

Auf den oberen Führungsbahnen 1c, 1d (oben und unten bedeutet im Wesentlichen in Richtung X voneinander beabstandet) sind zwei Fräsaggregate 8, 9 angeordnet, welche mittels eines Kreuzschlittens 15 in Spindelachsrichtung Z und in Richtung X verfahrbar sind. Die beiden Fräsaggregate 8, 9 weisen im gezeigten Beispiel auf den einander zugewandten Seiten jeweils scheibenförmig ausgebildete Fräser 8a, 9a auf, welche zwischen die Wangen des Kurbelwellenwerkstücks 6 bis zu deren Hauptlagern 6a und Hublagern 6b eintauchen können, Figur 5.

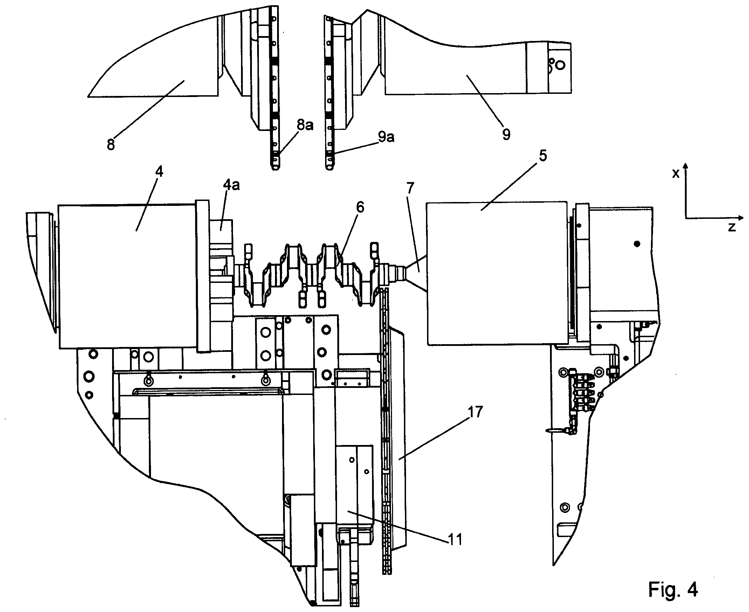

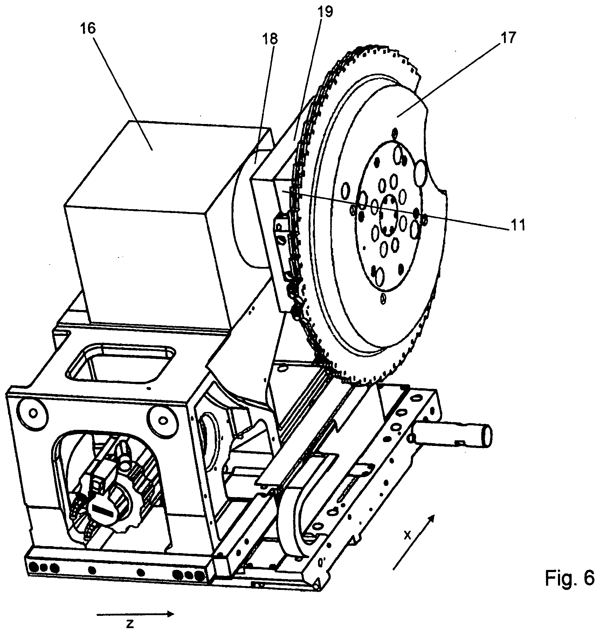

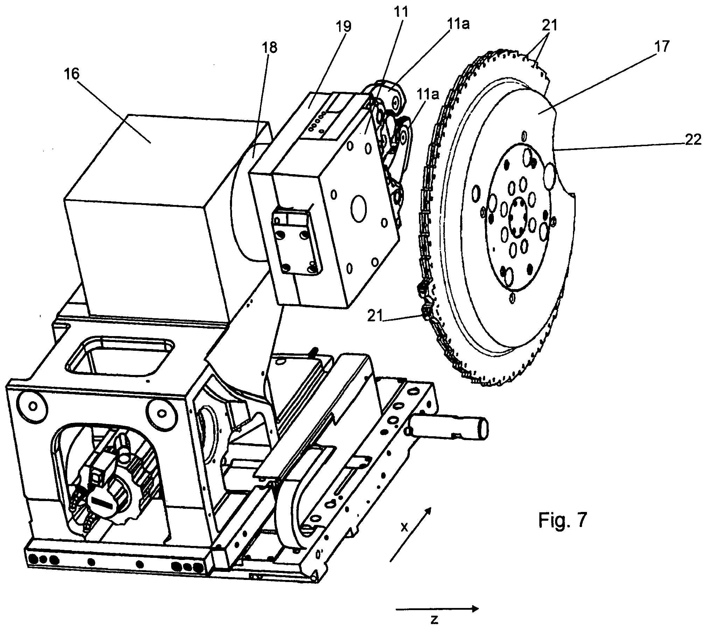

Das Drehaggregat 10 weist bevorzugt, wie insbesondere in den Figuren 6 und 7 gezeigt, einen erfindungsgemäßen Werkzeugrevolver 16 auf, in dessen Gehäuse eine Revolverwelle 18 drehbar gelagert ist. Die Revolverwelle 18 trägt einen Befestigungsflansch 19, an dem eine Lünette 11 befestigt ist, welche im gezeigten Beispiel drei Lünettenarme 11a zur Zentrierung eines Hauptlagers 6a des Kurbelwellenwerkstücks 6 aufweist. An einer Stirnseite der Lünette 11 ist eine Revolverscheibe 17 angebracht, die auf ihrem Umfang eine Mehrzahl von Drehwerkzeugen 21 trägt. Die Revolverscheibe 17 ist ebenfalls dazu ausgelegt, durch eine Verschiebung in Richtung X zwischen die Wangen des Kurbelwellenwerkstücks 6 einzutauchen, Figur 4. In Richtung der Lünettenarme 11a weist die Revolverscheibe 17 optional eine Aussparung 22 auf, in die das Kurbelwellenwerkstück 6 teilweise eintauchen kann. Bevorzugt ist die Revolverscheibe 17, wie in Figur 7 gezeigt, leicht vom Werkzeugrevolver 16 lösbar, wenn ihre Drehwerkzeuge 21 verschlissen sind.

Sie kann dann durch eine andere Revolverscheibe ersetzt werden. Dazu ist die Lünette 11 bevorzugt zwischen Revolverwelle und Revolverscheibe 17 vorgesehen. Bei dieser Anordnung kann die Revolverscheibe 17 ausgetauscht werden, ohne dass die Lünette 11 selbst von dem Befestigungsflansch 19 gelöst werden oder ihre Versorgungsleitungen getrennt werden müssen. Lange Stillstandzeiten werden so vermieden.

Grundsätzlich muss die Lünette 11 nicht am Drehaggregat 10 oder am Revolver 16 gelagert sein, sondern kann separat an der erfindungsgemäßen Maschine in Richtung X und Z verschieblich angeordnet sein. Die im Beispiel gezeigte Anbringung der Lünette 11 hat jedoch den Vorteil, dass sie deutlich mehr Spielraum aufweist und insbesondere bei der gezeigten Anordnung Bearbeitungsvorgänge nicht behindert.

Das Kurbelwellenwerkstück 6 wird so in den Spannfuttern 4 und 5 eingesetzt, dass ein Hublager 6b zwischen den Lünettenarmen 11a liegt. Beim Schließen der Lünettenarme 11a um den Hubzapfen 6b wird das Kurbelwellenwerkstück 6 in seine Ausgangsposition gedreht. Diese Lagefixierung dient einer Steuerung zur Synchronisation der Vorschubbewegung des Fräsaggregats in Richtung X mit der jeweiligen Drehlage des Kurbelwellenwerkstücks 6 um die C-Achse für alle zu bearbeitenden Hublager 6b.

Soll eine Bearbeitung der (den Spannfuttern 4, 5 zugewandten) Endbereiche des Kurbelwellenwerkstücks 6 durchgeführt werden, so wird der jeweilige Endbereich von dem zugehörigen Spannfutter freigegeben.

In Figur 4 ist dies für das Spannfutter 5 gezeigt. Das Kurbelwellenwerkstück 6 wird am Endbereich durch eine Zentrierspitze 7 abgestützt, welche verschieblich (in Z-Richtung) im Spannfutter 5 gelagert ist. Das Kurbelwellenwerkstück 6 wird in dieser Lage durch das Spannfutter 4 in Rotation versetzt. Die Spannfutter 4 und 5 sind bevorzugt baugleich ausgeführt und verfügen jeweils über eine Zentrierspitze mit den oben beschriebenen Eigenschaften. So kann jeder der beiden Endbereiche des Kurbelwellenwerkstücks 6 gleichermaßen gedreht und bearbeitet werden. Die Lünette 11 ist bevorzugt um eine Schwenkachse parallel zur Z-Achse schwenkbar, so dass sie bei der Drehbearbeitung des Kurbelwellenwerkstücks 6 aus dem Flugkreis des Kurbelwellenwerkstücks 6 herausgeschwenkt werden kann.

Bei der Fräsbearbeitung der Hauptlager 6a oder der Hublager 6b, diese ist in Figur 5 gezeigt, stützt die Lünette 11 das Kurbelwellenwerkstück 6 an einem der Hauptlager 6a ab, so dass eine Durchbiegung des Kurbelwellenwerkstücks 6 infolge der Abdrängkräfte des Fräsaggregats nicht möglich ist. Das Kurbelwellenwerkstück 6 kann sich dabei durch die Aussparung 22 in der Revolverscheibe 17 ungehindert drehen.

## Patentansprüche

1. Werkzeugrevolver mit einer Revolverwelle (18) und einem revolverwellenseitigen Befestigungsflansch (19), an welchem eine Drehwerkzeuge (21) aufnehmende Revolverscheibe (17) angeordnet ist, sowie mit einer am Werkzeugrevolver angebrachten Lünette (11), **dadurch gekennzeichnet dass** die Lünette (11) zwischen dem Befestigungsflansch (19) und der Revolverscheibe (17) angeordnet ist.

2. Werkzeugrevolver nach Anspruch 1,
**dadurch gekennzeichnet,**
**dass** die Revolverscheibe (17) um die Revolverdrehachse durch einen numerisch gesteuerten Antrieb stufenlos dreh- und stillsetzbar ist.

3. Werkzeugrevolver nach Anspruch 1 oder 2,
**dadurch gekennzeichnet,**
**dass** die Lünette (11) an dem Befestigungsflansch (19) angebracht ist.

4. Werkzeugrevolver nach einem der Ansprüche 1 bis 3,
**dadurch gekennzeichnet,**
**dass** die Revolverscheibe (17) an ihrem Umfang im Bereich der Lünette (11) eine Aussparung (22) aufweist.

5. Werkzeugrevolver nach einem der Ansprüche 1 bis 4,
**dadurch gekennzeichnet,**
**dass** die Lünette (11) gegenüber der Revolverscheibe (17) schwenkbar ausgebildet ist.

## Claims

1. Tool turret with a turret shaft (18) and a fastening flange (19) on the turret shaft side on which a turret disc (17) is arranged which holds turning tools (21, as well as with a bezel (11) attached to the tool turret,
**characterised in that**
the bezel (11) is mounted between the fastening flange (19) and the turret disc (17).

2. Tool turret according to claim 1,
**characterised in that**
the turret disc (18) can be rotated and stopped about the axis of rotation of the turret in an infinitely variable manner through a numerically controlled drive.

3. Tool turret according to claim 1 or 2
**characterised in that**
the bezel (11) is attached to the fastening flange (19).

4. Tool turret according to one of claims 1 to 3
**characterised in that**
the turret disc (17) has a recess (22) on its perimeter in the region of the bezel (11).

5. Tool turret according to one of claims 1 to 4
**characterised in that**
the bezel (11) is designed to pivot relative to the turret disc (17).

## Revendications

1. Revolver porte-outil, avec un arbre de revolver (18) et une bride de fixation (19), sur laquelle est disposé un plateau de revolver (17) recevant un outil de tournage (21), ainsi qu'avec une lunette (11), qui est installée sur le revolver porte-outil,
**caractérisé en ce que**
la lunette (11) est disposée entre la bride de fixation (19) et le plateau de revolver (17).

2. Revolver porte-outil selon la revendication 1,
**caractérisé en ce que**
le plateau de revolver (17) peut être mis en rotation ou être arrêté en continu par un entraînement à commande numérique.

3. Revolver porte-outil selon revendication 1 ou 2,
**caractérisé en ce que**
la lunette (11) est disposée sur la bride de fixation (19).

4. Revolver porte-outil selon l'une des revendications 1 à 3,
**caractérisé en ce que**
le plateau de revolver (17) présente un évidement (22) sur son pourtour, dans la région de la lunette (11).

5. Revolver porte-outil selon l'une des revendications 1 à 4,
**caractérisé en ce que**
la lunette (11) est conçue de manière à pouvoir pivoter par rapport au plateau de revolver (17).
